# EUROPEAN PATENT SPECIFICATION

(11) **EP 3 032 608 B1**
(45) Date of publication and mention of the grant of the patent: **09.01.2019**
(21) Application number: 13891289.4
(22) Date of filing: 22.10.2013
(51) Int. Cl.: H01M 2/10, H01M 2/34, H01M 2/20

(54) **BATTERY MODULE**
BATTERIEMODUL
MODULE DE BATTERIE

(30) Priority: 09.08.2013 JP 2013166885
(43) Date of publication of application: 15.06.2016
(73) Proprietor: Kabushiki Kaisha Toshiba, Minato-ku Tokyo 105-8001 (JP)
(72) Inventor: YAMAMOTO, Hirofumi, Tokyo 105-8001 (JP); NAGASATO, Makoto, Tokyo 105-8001 (JP); MATSUO, Tatsumi, Tokyo 105-8001 (JP); HIRAKI, Hideaki, Tokyo 105-8001 (JP); SEKINO, Masahiro, Tokyo 105-8001 (JP)
(74) Representative: AWA Sweden AB
(86) International application number: PCT/JP2013/078598
(87) International publication number: WO 2015/019510

(56) References cited:
- WO-A1-2012/066874
- WO-A1-2012/133179
- JP-A- 2009 193 942
- JP-A- 2010 244 760
- JP-A- 2011 054 353
- JP-A- 2012 038 468
- JP-A- 2012 109 152
- JP-A- 2012 128 982
- JP-A- 2013 012 464

## Description

### Technical Field

The present embodiment relates to a battery module.

### Background Art

The secondary battery apparatuses used in electric vehicles such as a hybrid car and an electric car, for example, must handle high output and frequent output changes. Such secondary battery apparatuses are generally configured as battery modules or assembled batteries in which a plurality of battery cells are electrically connected in series or in parallel in accordance with the required output or capacity, and which are mechanically integrated. It is more effective to improve manufacturability or to ensure manufacturing quality when the battery apparatuses are configured as modules. In a battery module, each battery cell has a positive electrode and a negative electrode. Among a plurality of battery cells, for example, the electrode terminals of two neighboring battery cells are connected to each other by a conductive member such as a bus bar. In addition, the plurality of battery cells are housed side-by-side in a case. Furthermore, a monitoring board that detects voltage or the like of the battery cells is placed on the case, and a cover is attached over the monitoring board.

Examples of prior art are disclosed in WO 2012/066874 A1, WO2012/133179 A1 and in JP 2010 244760 A.

### Citation List

Patent Literature 1: Jpn. Pat. Appln. KOKAI Publication No. 2009-231138

### Summary of Invention

### Technical Problem

As stated above, the battery module is configured by combining battery cells which are core members, a structural member such as a case, a conductive member (bus bar) which connects terminals of the battery cells, a voltage detection board on which a detection circuit of cell voltage is mounted, and the like. It is required for the battery module to have high density implementation for placement in a limited space.

The embodiments of the present invention have been prepared in view of the above circumstances, and the objective is to provide a battery module that accomplishes high density implementation.

### Solution to Problem

In accordance with the embodiment, a battery module is provided as described in claim 1 of the application.

### Brief Description of Drawings

FIG. 1 is an exploded perspective view of a battery module according to the first embodiment to explain an example configuration of the battery module.
FIG. 2 is an exploded perspective view of the secondary battery apparatus in which a cover and outer case are dismantled.
FIG. 3 is a perspective view roughly illustrating an example configuration of the first case and the second case of the battery module of the present embodiment.
FIG. 4 is a plain view of the battery module of the present embodiment in which a plurality of secondary battery cells are housed in the first case when viewed from above.
FIG. 5 is a figure to roughly explain another example of the arrangement of the secondary battery cells of the battery module of the present embodiment.
FIG. 6 is a figure to roughly explain another example of the arrangement of the secondary battery cells of the battery module of the present embodiment.
FIG. 7 is a figure to roughly explain another example of the arrangement of the secondary battery cells of the battery module of the present embodiment.
FIG. 8 is a figure to roughly explain another example of the arrangement of the secondary battery cells of the battery module of the present embodiment.
FIG. 9 is a figure to roughly explain another example of the arrangement of the secondary battery cells of the battery module of the present embodiment.
FIG. 10 is a figure to roughly explain another example of the arrangement of the secondary battery cells of the battery module of the present embodiment.
FIG. 11 is a figure to roughly explain an example of the arrangement of the secondary battery cells when the battery modules of the present embodiment are combined.
FIG. 12 is a figure to roughly explain an example of the arrangement of the secondary battery cells when the battery modules of the present embodiment are combined.
FIG. 13 is a figure to roughly explain an example of the arrangement of the secondary battery cells when the battery modules of the present embodiment are combined.
FIG. 14 is a figure to roughly explain an example of the arrangement of the secondary battery cells when the battery modules of the present embodiment are combined.

### Description of Embodiments

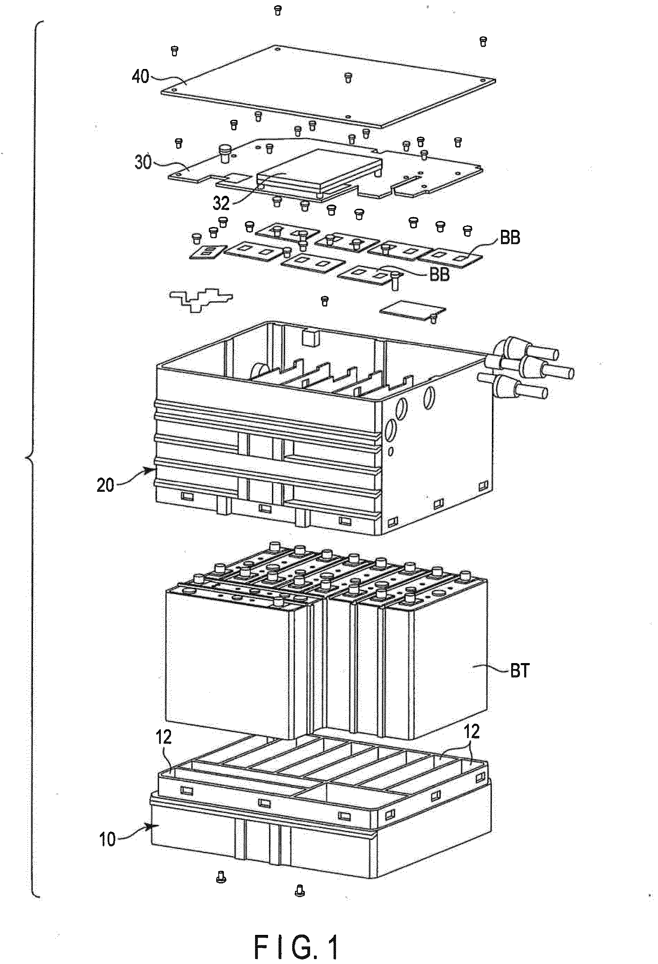

In the following, the secondary battery apparatus according to the embodiments will be described in detail with reference to the drawings. FIG. 1 is an exploded perspective view of a battery module according to the first embodiment to explain an example configuration of the battery module.

The battery module of the present embodiment comprises a plurality of secondary battery cells BT, a case including a first case 10 and a second case 20, a bus bar BB, a wiring board 30, and a cover 40.

Each secondary battery cell BT has, for example, an essentially rectangular parallelepiped shape. The battery module of the present embodiment comprises ten secondary battery cells BT.

The first case 10 is opened at an upper part and has a bottom part, the first case 10 supporting the bottom parts of the plurality of secondary battery cells. The first case 10 has concave parts 12 each of which holds one end of each of the plurality of secondary battery cells. The ends of the plurality of secondary battery cells are spaced and held by the concave parts 12 of the first case 10, and are fixed to the first case 10, for example, by adhesives.

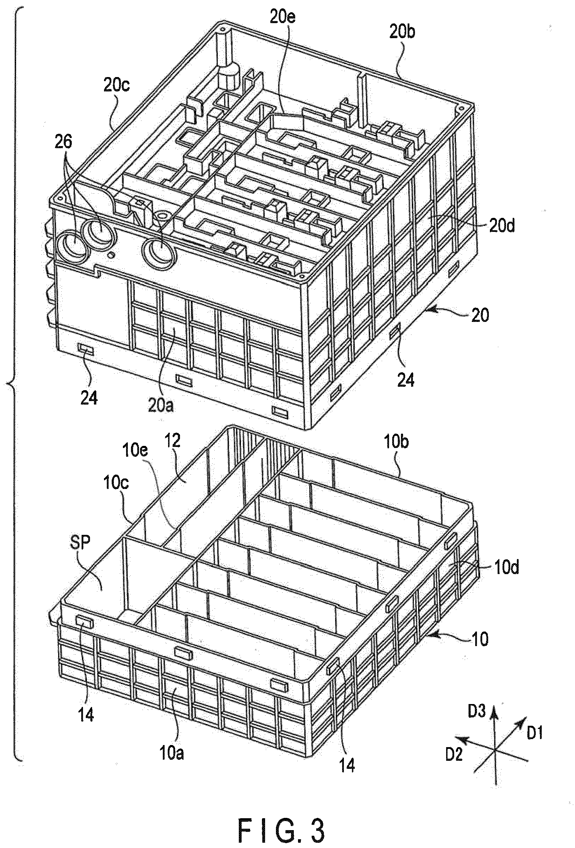

The second case 20 has a tubular shape in which the upper and bottom parts are opened. The second case 20 has dividers (shown in FIG. 3) which guide the upper parts of the plurality of secondary battery cells BT to be fixed with a predetermined space. The other ends of the plurality of secondary battery cells are spaced via the dividers of the second case 20 and fixed to the first case 20 by adhesives, for example.

The bus bar BB is a conductive member that electrically connects the positive terminals and the negative terminals of adjacent secondary battery cells BT. The bus bar BB is placed on each of the dividers of the second case 20 so as to electrically connect with the electrode terminal of the secondary battery cell BT exposed from the upper opening of the second case 20. The bus bar BB has a hole connected to a screw hole provided in the second case 20, for example, and is fixed to the second case 20 by a screw to be inserted into the screw hole of the second case 20 and the hole of the bus bar BB from the upper part of the second case 20.

The wiring board 30 is placed at the upper part of the case, namely, at the upper parts of the plurality of secondary battery cells BT from the upper opening of the second case 20. A plurality of electronic members (not shown in the drawings) are mounted on the wiring board 30, and the wiring board 30 has circuit patterns not shown in the drawings formed on the top surface (surface opposed to cover 40) and the rear surface (surface opposed to the plurality of secondary battery cells BT). For example, the wiring board 30 has a field effect transistor (FET) as a switching element 32 that switches connection between the plurality of secondary battery cells BT and a main circuit. The switching element 32 is placed on the top surface of the wiring board 30. The wiring board 30 has a hole connected to the screw hole provided to the second case 20, and is fixed to the second case 20 by a screw to be inserted into the screw hole of the second case 20 and the hole of the wiring board 30 from the upper part of the second case 20. The wiring board and cover 40 are fixed with a screw to the second case 20 to cover the upper opening of the second case 20.

The first case 10 and the second case 20 are made, respectively, by an injection molding method etc. using synthetic resin having insulation properties, such as thermoplastic resin, for example, polycarbonate (PC) and polyphenylene ether (PPE). The cover is formed of relatively flexible resin such as polypropylene so as to realize easy attachment or detachment.

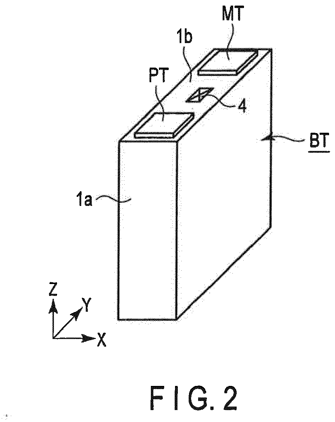

FIG. 2 is a perspective view roughly illustrating an example configuration of the secondary battery cell mounted on the battery module of the present embodiment.

Each secondary battery cell BT is a non-aqueous electrolyte secondary battery such as a lithium ion battery, and comprises a flat rectangular parallelepiped outer housing 1 formed by aluminum or aluminum alloy and an electrode body (not shown in the drawings) stored together with a non-aqueous electrolyte in the outer housing 1. The outer housing 1 has a housing body 1a whose top end is opened, and a rectangular plate-like lid member 1b which is welded to the housing body 1a and closes the opening of the housing body, thereby forming liquid-tight state inside. The housing body 1a comprises a bottom surface, a pair of main surfaces extending essentially orthogonal to the bottom surface from a pair of long sides of the bottom surface, and a pair of side surfaces extending between the main surfaces. The bottom surface and the lid member 1b are opposed to each other. The electrode body is formed flat and rectangular by winding a positive electrode plate and a negative electrode plate with a separator interposed therebetween, and compressing it in a radial direction.

A positive terminal PT and a negative terminal MT are provided respectively on both ends of the longitudinal direction Y of the lid member 1b and project from the lid member. The positive terminal PT and the negative terminal MT are electrically connected to the positive electrode and the negative electrode of the electrode body, respectively. One of the terminals, for example, the positive terminal PT, is electrically connected to the lid member 1b, and has the same potential as that of the outer housing 1. The negative terminal MT extends through the lid member 1b. A sealing member formed of synthetic resin, an insulator such as glass, and, for example, a gasket is provided between the negative terminal MT and the lid member 1b.

A rectangular safety valve 4, for example, is formed at the center of the lid member 1b, namely, between the positive terminal PT and negative terminal MT in the longitudinal direction Y. When gas is generated in the outer housing 1 by an unusual mode etc. of the secondary battery cell BT, and the internal pressure of the outer housing rises to or above a predetermined value, the safety valve 4 is released, which lowers the internal pressure and prevents problems such as a rupture of the outer housing 1.

The secondary battery cells BT of the present embodiment, for example, have the ratio of the width of the longitudinal direction Y to the width of the thickness direction (stacked direction) X of around 5:1. Specifically, the outer housing 1 has the width of the longitudinal direction Y which is about 115mm, the width in the stacked direction X which is about 22mm, and the width of the height direction Z which is about 103mm. The longitudinal direction Y, the stacked direction X, and the height direction Z are essentially orthogonal to each other.

FIG. 3 is a perspective view roughly illustrating an example configuration of the first case and the second case of the battery module of the present embodiment.

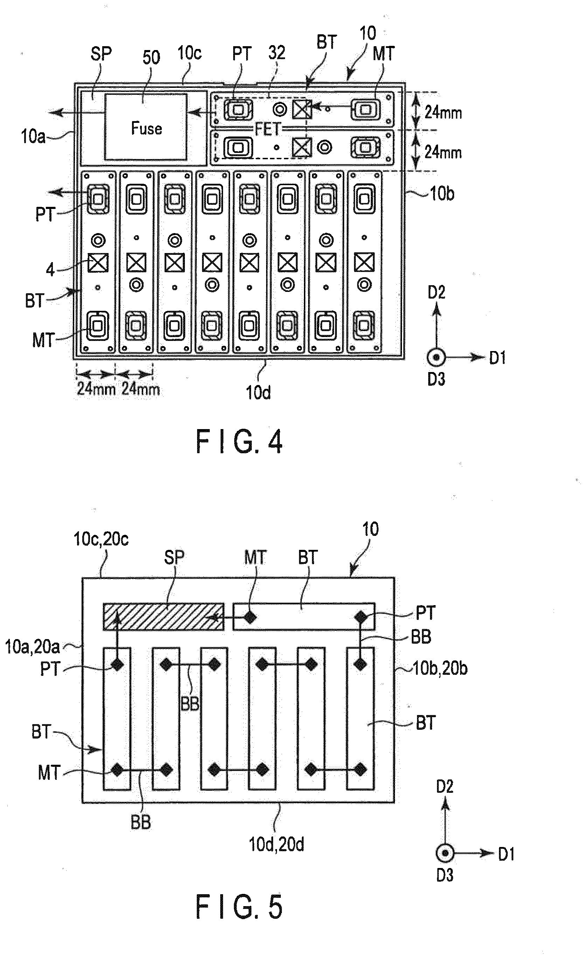

FIG. 4 is a plain view of the battery module of the present embodiment in which a plurality of secondary battery cells are housed in the first case when viewed from above.

As shown in FIG. 1 to FIG. 4, the first case 10 is formed to have a size corresponding to ten secondary battery cells BT, and has a rectangular bottom wall (not shown in the drawings) facing the bottom surfaces of the secondary battery cells BT; a pair of side frames of the bottom wall opposed to each other, i.e., a pair of first side walls 10a and 10b that are provided in upright positions along the side edge extending in a second direction D2 and are opposed to the main surface of the secondary battery cells BT stacked in the first direction D1; another pair of side frames of the bottom wall opposed to each other, i.e., a pair of second side walls 10c and 10d that are provided in upright positions along the side edge extending in the first direction D1 and are opposed to the side surfaces of the secondary battery cells BT stacked in the first direction D1; and a plurality of dividing walls 10e provided in upright positions from the bottom wall. The first direction D1 and the second direction D2 are, for example, essentially parallel to crossing side edges of the bottom surface of the first case 10, and essentially orthogonal to each other.

By means of the bottom wall, the first side walls 10a and 10b, and the second side walls 10c and 10d or the dividing walls 10e, a plurality of concave parts 12, i.e., ten concave parts in this embodiment, are defined. Each of the concave parts 12 is formed to have a cross section slightly larger than a cross section of a secondary battery cell BT and to have an upper opening by which the secondary battery cell BT can be inserted. The depth of the concave part 12 is about half the width from the bottom to the top of the main surface of the secondary battery cell BT.

The first side walls 10a and 10b, and the second side walls 10c and 10d of the first case 10 are provided with engagement lugs 14 which engage with engagement holes of the second case 20 described later. The engagement lugs 14 externally project from the wall surfaces of the first side walls 10a and 10b and the second side walls 10c and 10d.

Ten secondary battery cells BT are housed in the respective concave parts 12, and positioned by a positioning means such as adhesives not shown in the drawings.

The plurality of secondary battery cells include a first cell group for the cells stacked in the first direction D1, and a second cell group for the cells stacked in the second direction D2. In the present embodiment, among ten secondary battery cells BT, eight cells are stacked in the first direction D1, and two cells are stacked in the second direction D2. That is, for each of the eight cells of the ten secondary battery cells BT, the main surface of the outer housing 1 is essentially orthogonal to the first direction D1, and for each of the two cells of the ten secondary battery cells BT, the main surface of the outer housing 1 is essentially orthogonal to the second direction D2. The side surfaces of the secondary battery cells in the first cell group are arranged to be opposed to the main surfaces of the secondary battery cells in the second cell group, and the plurality of secondary battery cells are connected in series.

For the eight secondary battery cells BT stacked in the first direction D1, the main surfaces of the outer housings 1 face each other with a predetermined space, and the upper surfaces of the outer housings 1 to which electrode terminals PT and MT are provided are oriented in the same direction. The eight secondary battery cells BT are alternately inverted by 180° so that the positive terminal PT of a cell is placed next to the negative terminal MT of another cell. The pitch for arranging the eight secondary battery cells BT is about 24mm. The pitch for arranging the secondary battery cells is the width including the width of the secondary battery cell in the stacked direction X, and the space between the secondary battery cell and an adjacent secondary battery cell.

In the direction that the secondary battery cells BT are stacked, the ratio of the sum (pitch) of the width of the secondary battery cell BT and the width of space between two secondary battery cells to the width of the main surface of the secondary battery cell BT in the longitudinal direction Y is about 1:4 to 1:10.

For the two secondary battery cells BT stacked in the second direction D2, the main surfaces of the outer housings 1 face each other with a predetermined space, and the upper surfaces of the outer housings 1 to which electrode terminals PT and MT are provided are oriented in the same direction. The two secondary battery cells BT are alternately inverted by 180° so that the positive terminal PT of a cell is placed next to the negative terminal MT of another cell. The pitch for arranging the two secondary battery cells BT is about 24 mm. The pitch for arranging the secondary battery cells is the width including the width of the secondary battery cell in the stacked direction X, and the space between the secondary battery cell and an adjacent secondary battery cell, or the space between the two secondary battery cells and the secondary battery cells stacked in the first direction D1.

The secondary battery cells BT stacked in the second direction D2 are arranged close to one of the first side walls 10a and 10b of the first case 10 so that the side surfaces of the secondary battery cells BT face one of the first side walls 10a and 10b of the first case 10. Accordingly, for each of the two secondary battery cells BT, the positive terminal PT and the negative terminal MT are arranged along the first direction D1, and one of the positive terminal PT and the negative terminal MT is arranged close to the first side wall 10a or 10b.

The width in the first direction D1 of the first case 10, namely, the width of the second side walls 10c and 10d in the first direction D1, is the width capable of stacking eight secondary battery cells BT. Accordingly, if the secondary battery cells stacked in the second direction D2 are arranged close to one of the first side walls 10a and 10b, a space SP enclosed by the dividing walls 10e and the side wall of the first case 10 is defined between the secondary battery cells and another of the first side walls 10a and 10b. In the battery module of the present embodiment, a component other than the secondary battery cells BT, such as a fuse 50, is placed in the space SP. The space SP is a junk box that is capable of housing, for example, the fuse 50, an FET as a switching element, a contactor (relay), a circuit breaker, a bimetal switch, a current protection element, or a heat protective element such as a PTC (PolySwtich).

It is desirable that the space SP is an area sufficient to house at least the fuse 50 and a bus bar BB. Since the size of fuse 50 and the bus bar BB is determined in accordance with the output current etc. of the battery module, the space SP having the size in accordance with the standards of the battery module should be provided.

The second case 20 covers the first case 10 in which the battery cell 12 is stored from above and is attached to the first case 10.

The second case 20 has first peripheral walls 20a and 20b having engagement holes 24 to be engaged with the engagement lugs 14 of the first side walls 10a and 10b of the first case 10; second peripheral walls 20c and 20d having engagement holes 24 to be engaged with the engagement lugs 14 of the second side walls 10c and 10d; and dividers 20e that are placed between the outer housings 1 of the plurality of secondary battery cells BT to guide the secondary battery cells BT to predetermined positions. The dividers 20e position the secondary battery cells BT not only in the stacked direction X and the longitudinal direction Y, but also in the height direction Z. The secondary battery cells BT are mounted at the respective positions, fixed to the dividing walls 10e and positioned by positioning means such as adhesives not shown in the drawings.

For the second case 20, a plurality of engagement holes 24 formed at the lower position of the peripheral walls 20a to 20d of the second case 20 are engaged with the engagement lugs 14 formed at the upper position of each of the side walls 10a to 10d of the first case 10 so that the peripheral walls 20a to 20d are consecutively attached to the side walls 10a to 10d.

The positive terminal PT, negative terminal MT, and safety valve 4 of each secondary battery cell BT are exposed upward by being inserted into the opening of the corresponding dividers 20e. The dividers 20e are each provided with a rib or a projection (not shown in the drawings) that positions the bus bar BB connecting the positive terminal PT and the negative terminal MT of the secondary battery cells.

The plurality of secondary battery cells BT are electrically connected, for example, in series with each other by the plurality of bus bars BB used as conductive members. In the present embodiment, the potential at the side of the first side wall 10a of the secondary battery cells arranged in the first direction D1 is the highest, and the potential at the side of the second side wall 10c of the secondary battery cells arranged in the second direction D3 is the lowest.

In the present embodiment, multiple types of bus bars BB are used as conductive members or connecting members. That is, I-shaped bus bars that each connect the positive terminal PT to the negative terminal MT of the adjacent secondary battery cells in the first direction D1; a bus bar that connects the negative terminal MT of the secondary battery cell BT at the side having the low potential among the secondary battery cells BT arranged in the first direction D1 to the positive terminal PT of the secondary battery cell BT at the side having the low potential among the secondary battery cells BT arranged in the second direction D2; a bus bar that connects the negative terminal MT of the secondary battery cell at the side having the high potential among the secondary battery cells BT arranged in the second direction D2 to the wiring board 30; a bus bar that connects the switching element 32 of the wiring board 30 to the fuse 50; and bus bars that are electrically connected to the positive terminal PT of the secondary battery cell BT at the side having the highest potential or the negative terminal of the secondary battery cell BT at the side having the lowest potential and each are integrally formed with an output terminal.

The aforementioned multiple types of bus bars BB are formed by bending a metallic plate formed of a conductive material, such as aluminum. The bus bars BB are welded by laser welding, electronic beam welding, or resistance welding, etc., by engaging the electrode terminals PT and MT with the holes provided to the metallic plate. The detailed shape of bus bars is not explained here.

As stated above, the plurality of secondary battery cells BT are connected in series with each other. An output cable is attached to a positive output terminal (not shown in the drawings) electrically connected to the positive terminal PT of the secondary battery cell BT at the side having the highest potential, and to a negative output terminal (not shown in the drawings) electrically connected to the negative terminal MT of the secondary battery cell BT at the side having the lowest potential. The output cables are drawn out of the second case 20 from cable holes 26 provided to the second case 20. The negative output terminal is electrically connected to the negative terminal MT of the secondary battery cell BT at the side having the lowest potential through the fuse 50 and the switching element 32 mounted on the wiring board 30.

The second case 20 has a tubular shape enclosed by the peripheral walls 20a to 20d, and the wiring board 30 is provided at the upper opening. A screw hole is provided at the upper portion of the second case 20, and the wiring board 30 is screwed on the second case 20 through the screw hole. The opening of the second case 20 is closed by the cover 40 above the wiring board 30. The cover 40 is fixed to the second case 20 by a screw inserted into the screw hole provided to the second case 20.

The battery module of the present embodiment is essentially cubic when manufactured as stated above. For example, in the configuration where all of the plurality of secondary battery cells BT are stacked in the same direction, if the number of secondary battery cells to be connected is increased, the outer shape of the battery module becomes longer in the stacked direction. For the battery module having a long width in the stacked direction of the secondary battery cells BT, if an area to house the battery module in an apparatus on which the battery module is installed is predetermined, there may be a case where it is difficult to efficiently house the battery module in the predetermined area. In particular, if multiple battery modules are combined and installed, a larger space is needed to install the battery module having a longer width in the direction stacking the secondary battery cells BT.

In contrast, the battery module of the present embodiment, the secondary battery cells BT are stacked in multiple directions crossing each other when installed. Accordingly, even if the number of the secondary battery cells BT to be connected is increased, the width of the battery module does not become larger in a particular direction, thereby forming an essentially cubic shape. Thus, it is possible to effectively use space for installing the battery module in an electronic apparatus or an electric car. In other words, it is possible to avoid the need for a large space for the installation of a battery module in an electronic apparatus or an electronic car, thereby downsizing the electronic apparatus or the electric car. That is, the present embodiment accomplishes providing a battery module capable of high density implementation. In addition, forming the battery module to be essentially cubic realizes better vibration durability, and increases rigidity of the housing.

Furthermore, the battery module of the present embodiment stacks the secondary battery cells BT in multiple directions crossing each other so that a configuration other than the secondary battery cells BT is housed in the space SP generated within the first case 10 and the second case 20. With this structure, it is not necessary to additionally provide a structure to place a configuration other than the secondary battery cells BT inside or outside the first case 10 and the second case 20, thereby maintaining the outer shape of the first case 10 and the second case 20.

In addition, if the secondary battery cells BT are stacked in one direction, a terminal outputting a positive output and a terminal outputting a negative output are placed at both sides in the stacked direction. Thus, if the positive output and the negative output are output from one side, the wiring path at one side of the main circuit may become longer. In contrast, the battery module of the present embodiment connects the secondary battery cells stacked in the first direction D1 and the secondary battery cells stacked in the second direction D2 in series with each other, thereby avoiding the wiring path from becoming longer even if the main circuit output is from one side. With this structure, since it is possible to reduce the amount of heat generated in the wiring path, a component such as a harness member can be reduced, thereby reducing the manufacturing cost of the secondary battery modules and reducing the mass of the secondary battery modules.

The above embodiment explains the battery module in which ten secondary battery cells BT are connected in series; however, the number of the secondary battery cells BT is not limited to ten. Since the ratio of the arrangement pitch in the stacked direction of the secondary battery cells BT to the width of the secondary battery cells BT in the longitudinal direction Y is about 1:5, it is desirable to connect at least seven secondary battery cells BT in series in order to stack secondary battery cells BT in different directions with the arrangement pitch similar to that of the present embodiment, and to effectively place the secondary battery cells BT within the first case 10 and the second case 20 along with providing a space SP.

FIG. 5 to FIG. 7 are figures to roughly explain another example of the arrangement of the secondary battery cells of the battery module of the present embodiment. In the following, the arrangement example of the secondary battery cells BT when the odd number of secondary battery cells BT are connected in series will be explained. In the examples shown in FIGS. 5 to 7, seven secondary battery cells BT are connected in series. The shape and the size of the secondary battery cell used in the explanation are the same as those of the secondary battery cell BT in the aforementioned explanation.

In the example of FIG. 5, six secondary battery cells stacked in the first direction D1 are included in the first cell group, and one secondary battery cell BT oriented in the second direction D2 is included in the second cell group.

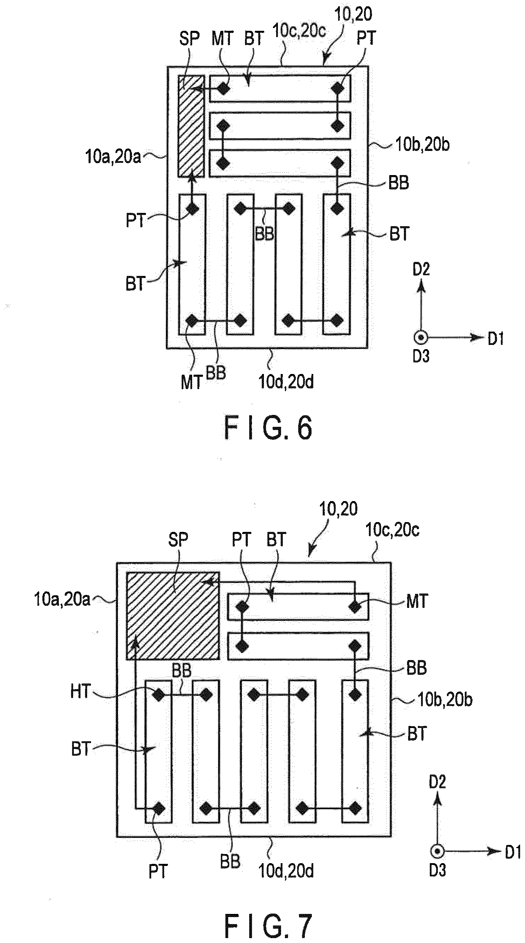

In the example of FIG. 6, four secondary battery cells stacked in the first direction D1 are included in the first cell group, and three secondary battery cells BT stacked in the second direction D2 are included in the second cell group.

In the example of FIG. 7, five secondary battery cells stacked in the first direction D1 are included in the first cell group, and two secondary battery cells BT stacked in the second direction D2 are included in the second cell group.

According to the above examples, in the case where the negative terminal at the side having low potential in the first cell group, and the positive terminal at the side having high potential in the second cell group are placed close to each other, the wiring path can be shortened even if power of the main circuit is output from one side for the case where an even number of secondary battery cells BT are stacked in the first direction D1; however, one side of the wiring path may be longer if power of the main circuit is output from one side for the case where an odd number of secondary battery cells BT are stacked in the first direction D1. Thus, for the case where an even number of secondary battery cells BT are included in the first cell group, the wiring path from the output terminal to the main circuit can be shortened.

In addition, it is desirable that the number of the secondary battery cells BT included in the first cell group is greater than the number of the secondary battery cells BT included in the second cell group. The length of a side along the first direction D1 of the space SP is defined in accordance with the difference between the width of the first cell group in the first direction D1 and the width of the secondary battery cell in the longitudinal direction, and the length of a side along the second direction D2 of the space SP is defined in accordance with the width of the second cell group in the second direction D2. Thus, it is desirable that the width of the first cell group in the first direction D1 is greater than the width of the secondary battery cell BT in the longitudinal direction in order to secure the space SP. The number of secondary battery cells BT included in the first cell group and the second cell group should be adjusted in accordance with the required area of the space SP.

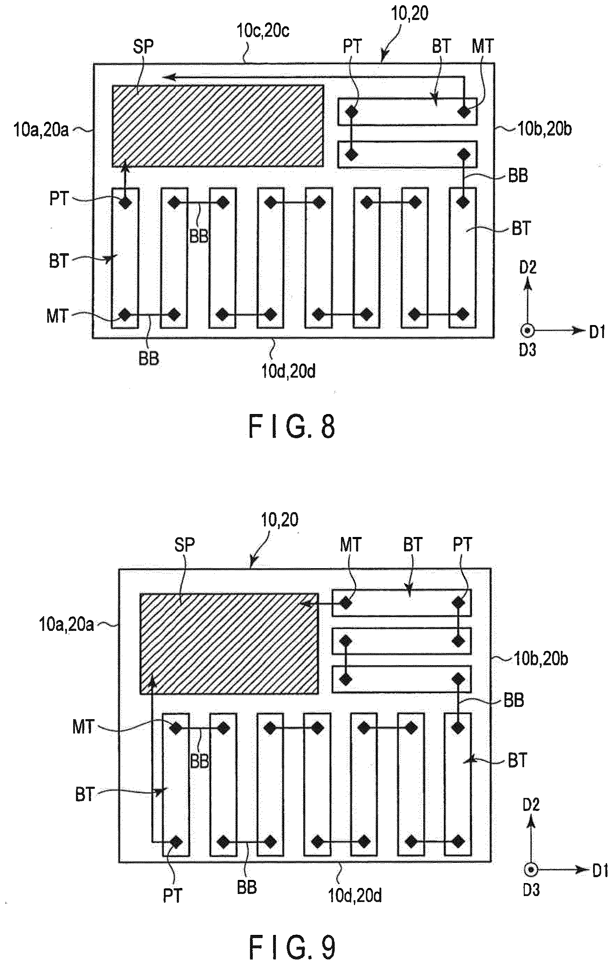

FIG. 8 to FIG. 10 are figures to roughly explain another example of the arrangement of the secondary battery cells of the battery module of the present embodiment. In the following, the arrangement example of the secondary battery cells BT when an even number of secondary battery cells BT are connected in series will be explained. In the examples shown in FIGS. 8 to 10, ten secondary battery cells BT are connected in series.

In the example of FIG. 8, eight secondary battery cells BT stacked in the first direction D1 are included in the first cell group, and two secondary battery cells BT stacked in the second direction D2 are included in the second cell group. This example is the same as the aforementioned embodiment in the arrangement of the secondary battery cells BT.

In the example of FIG. 9, seven secondary battery cells BT stacked in the first direction D1 are included in the first cell group, and three secondary battery cells BT stacked in the second direction D2 are included in the second cell group.

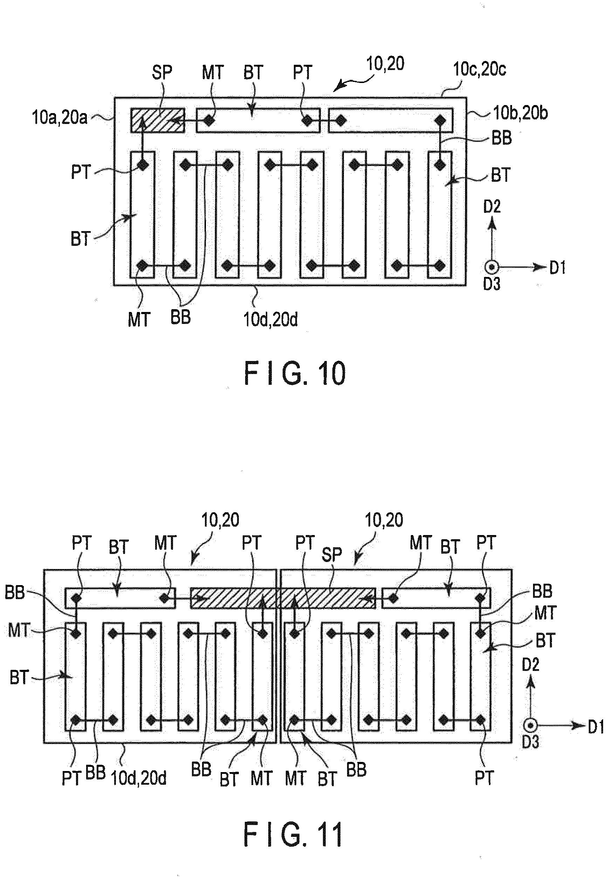

In the example of FIG. 10, eight secondary battery cells BT stacked in the first direction D1 are included in the first cell group, and two second cell groups each including one secondary battery cell BT are arranged side by side in the first direction D1. In this example, eight secondary battery cells BT are stacked in the first direction D1, and the remaining two secondary battery cells BT are arranged side by side in the first direction D1 in the manner that the main surfaces are essentially orthogonal to the second direction D2.

According to the above examples, in the case where the negative terminal at the side having low potential in the first cell group and the positive terminal at the side having high potential in the second cell group are placed close to each other, one of the wiring paths from the output terminal to the main circuit becomes longer regardless of the number of the secondary battery cells BT stacked in the first direction D1; both wiring paths from the output terminal to the main circuit become shorter in comparison with the case where the plurality of secondary battery cells BT are stacked in series in one direction.

In addition, as shown in FIG. 10, arranging the second cell groups in parallel in the first direction D1 can shorten the wiring path from the output terminal to the main circuit. In this case, the length of a side along the first direction D1 of the space SP is defined in accordance with the difference between the width of the first cell group in the first direction D1 and two times the width of the secondary battery cell in the longitudinal direction, and the length of a side along the second direction D2 of the space SP is defined in accordance with the greater width of the two second cell groups in the second direction D2. Thus, it is desirable that the width of the first cell group in the first direction D1 is greater than two times the width of the secondary battery cell BT in the longitudinal direction in order to secure the space SP. In this case, the number of secondary battery cells BT included in the first cell group and the second cell group should be also adjusted in accordance with the required area of the space SP.

FIG. 11 to FIG. 14 are figures to roughly explain an example of the arrangement of the secondary battery cells when the battery modules of the present embodiment are combined and connected in parallel. In the following, the case where battery modules in which the odd number of secondary battery cells BT are connected in series are combined, and the case where battery modules in which an even number of secondary battery cells BT are connected in series are combined.

In the example of FIG. 11, two battery modules including seven secondary battery cells BT connected in series are connected in parallel. One of the two battery modules are similar to the battery module shown in FIG. 5. Another battery module is configured so that the secondary battery cells BT and the space SP are arranged in mirrored symmetry to the other battery module relative to the surface essentially parallel to the second direction D2 and the third direction D3 at the side of the plurality of secondary battery cells BT of the battery module shown in FIG. 5 having the highest potential.

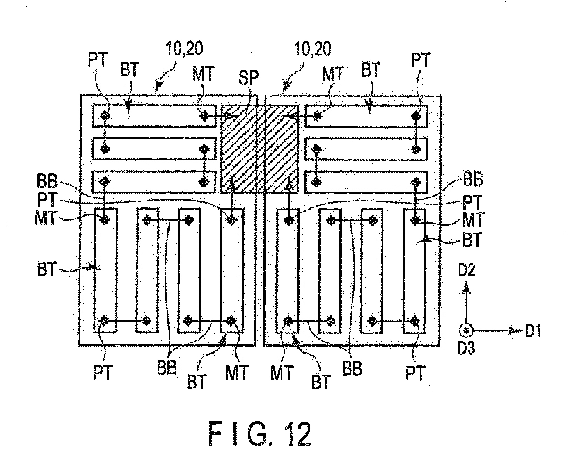

In the example of FIG. 12, two battery modules including seven secondary battery cells BT connected in series are connected in parallel. One of the two battery modules are similar to the battery module shown in FIG. 6. Another battery module is configured so that the secondary battery cells BT and the space SP are arranged in mirrored symmetry to the other battery module relative to the surface and essentially parallel to the second direction D2 and the third direction D3 at the side of the plurality of secondary battery cells BT of the battery module shown in FIG. 6 having the highest potential.

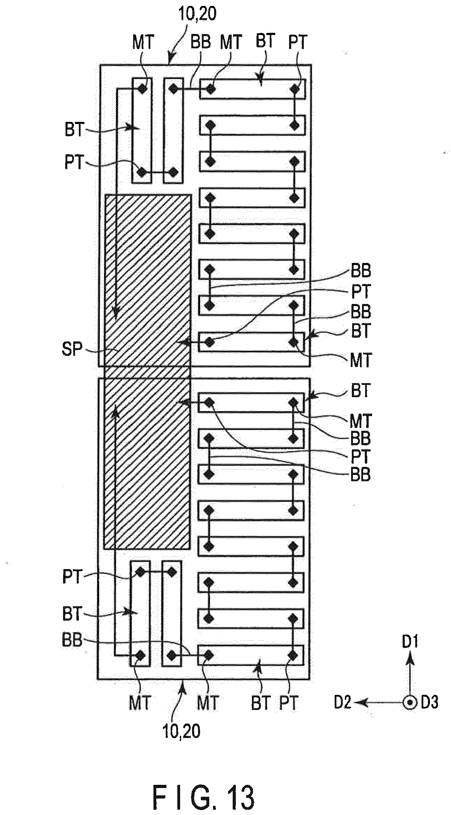

In the example of FIG. 13, two battery modules including ten secondary battery cells BT connected in series are connected in parallel. One of the two battery modules are similar to the battery module shown in FIG. 8. Another battery module is configured so that the secondary battery cells BT and the space SP are arranged in mirrored symmetry to the other battery module relative to the surface and essentially parallel to the second direction D2 and the third direction D3 at the side of the plurality of secondary battery cells BT of the battery module shown in FIG. 8 having the highest potential.

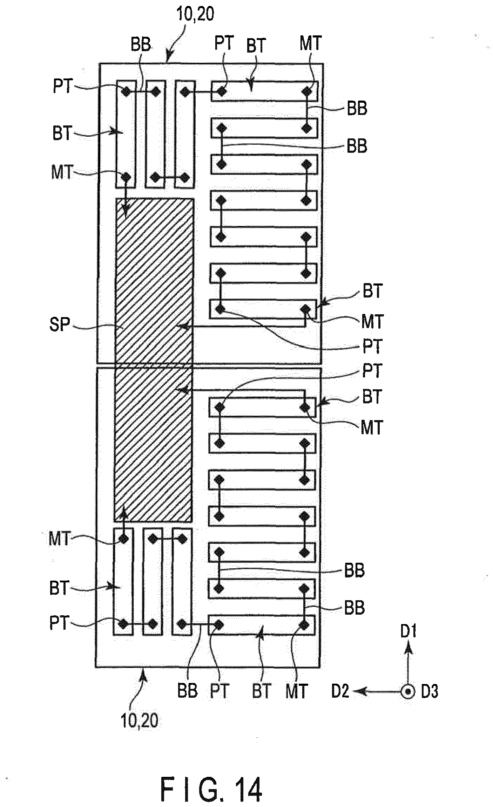

In the example of FIG. 14, two battery modules including ten secondary battery cells BT connected in series are connected in parallel. One of the two battery modules are similar to the battery module shown in FIG. 9. Another battery module is configured so that the secondary battery cells BT and the space SP are arranged in mirrored symmetry to the other battery module relative to the surface and essentially parallel to the second direction D2 and the third direction D3 at the side of the plurality of secondary battery cells BT of the battery module shown in FIG. 9 having the highest potential.

According to the above examples, a battery module is formed in mirrored symmetry to the secondary battery cells BT and the space SP in another battery module, and the spaces SP of the two battery modules are adjacent to each other in the first direction. With this structure, the two battery modules can share two spaces SP, and can use the gap between the two spaces SP and the upper space of the gap.

In addition, it is possible to connect four battery modules in parallel by using two battery cells connected in parallel as stated above. In such a case, the battery modules shown in FIG. 11 to FIG. 14 are rotated by 180° and arranged so that four spaces SP are adjacent to each other. In this case, the four battery modules can share four spaces SP, and can use the gap between the four spaces SP and the upper space of the gap.

As stated above, the present embodiment has been prepared to provide a battery module that is capable of high density implementation.

It is to be noted that the present invention is not limited to the above-described embodiment, and can be provided by modifying the constituent elements within the scope of the claims defining the subject-matter of the invention.

## Claims

1. A battery module comprising:
a plurality of secondary battery cells (BT) each comprising a housing body (1a) including a bottom surface, a pair of main surfaces extending essentially orthogonal to the bottom surface from a pair of long sides of the bottom surface, and a pair of side surfaces extending between the main surfaces, and a lid member (1b) opposed to the bottom surface and having electrode terminals (PT, MT);
a case (10, 20) for housing the plurality of secondary battery cells (BT);
a plurality of conductive members (BB) for electrically connecting the electrode terminals (PT, MT) of the secondary battery cells (BT); and
a wiring board (30) placed at an upper portion of the conductive members (BB) on the case (10, 20),
wherein the plurality of secondary battery cells (BT) comprises a first cell group including a plurality of secondary battery cells (BT) stacked along a first direction, and a second cell group including a plurality of secondary battery cells(BT) stacked along a second direction crossing the first direction, the side surfaces of the secondary battery cells (BT) of the first cell group are opposed to the main surfaces of the secondary battery cells (BT) of the second cell group, and the first cell group and the second cell group are connected in series, and
the case (10, 20) includes a first case (10) having a bottom wall opposed to the bottom surface of the plurality of secondary battery cells (BT), side walls including a pair of first side walls (10a, 10b) extending to be opposed to the main surfaces of the secondary battery cells (BT) included in the first cell group from edges of the bottom wall, and a pair of second side walls (10c, 10d) extending to be opposed to the main surfaces of the secondary battery cells (BT) included in the second cell group from edges of the bottom wall, and a plurality of dividing walls (10e) arranged upright to the bottom wall,;
**characterized by**
a plurality of concave parts (12) defined by the bottom wall, the first pair of side walls (10a, 10b) and the second side walls (10c, 10d), or the dividing walls (10e), wherein the concave parts support a respective bottom part of the secondary battery cells (BT), and a space (SP) in which a component other than the secondary battery cells (BT) is placed, the space (SP) being enclosed by the dividing walls (10e) and the side walls (10a, 10b, 10c, 10d).

2. The battery module according to claim 1, **characterized in that** in a direction that the secondary battery cells (BT) are stacked, a ratio of the sum of a width of the secondary battery cell (BT) and a width of space to an adjacent secondary battery cell (BT) to the width of the main surface of the secondary battery cell (BT) in the longitudinal direction is 1:4 to 1:10.

3. The battery module according to claim 1, further comprising:
a current protection element or a heat protection element placed in the space (SP).

4. The battery module according to claim 1 or 3, further comprising:
a switching element mounted on the wiring board (30).

5. The battery module according to claim 4, when claim 4 is dependent on claim 3, **characterized in that** an electrode terminal (PT, MT) of the plurality of secondary battery cells (BT) at a side having lowest potential is electrically connected to the current protection element or the heat protection element through the switching element.

6. The battery module according to claim 4, **characterized in that** the switching element is placed on a top surface of the wiring board (30).

## Patentansprüche

1. Batteriemodul, umfassend:
mehrere Sekundärbatteriezellen (BT), die jeweils einen Aufnahmekörper (1a), der eine Bodenfläche, ein Paar Hauptflächen, die sich von einem Paar Längsseiten der Bodenfläche im Wesentlichen senkrecht zu der Bodenfläche erstrecken, und ein Paar Seitenflächen, die sich zwischen den Hauptflächen erstrecken, beinhaltet, und ein Deckelelement (1b), das der Bodenfläche gegenüberliegt und Elektrodenanschlüsse (PT, MT) aufweist, umfassen;
ein Gehäuse (10, 20) zur Aufnahme der mehreren Sekundärbatteriezellen (BT);
mehrere leitende Elemente (BB) zur elektrischen Verbindung der Elektrodenanschlüsse (PT, MT) der Sekundärbatteriezellen (BT); und
eine Leiterplatte (30), die an einem oberen Abschnitt der leitenden Elemente (BB) auf dem Gehäuse (10, 20) angeordnet ist,
wobei die mehreren Sekundärbatteriezellen (BT) eine erste Zellengruppe, die mehrere Sekundärbatteriezellen (BT) beinhaltet, die entlang einer ersten Richtung gestapelt sind, und eine zweite Zellengruppe, die mehrere Sekundärbatteriezellen (BT) beinhaltet, die entlang einer zweiten Richtung, die die erste Richtung kreuzt, gestapelt sind, umfassen, wobei die Seitenflächen der Sekundärbatteriezellen (BT) der ersten Zellengruppe den Hauptflächen der Sekundärbatteriezellen (BT) der zweiten Zellengruppe gegenüberliegen, und wobei die erste Zellengruppe und die zweite Zellengruppe in Reihe geschaltet sind, und
wobei das Gehäuse (10, 20) ein erstes Gehäuse (10) beinhaltet, das eine Bodenwand, die der Bodenfläche der mehreren Sekundärbatteriezellen (BT) gegenüberliegt, Seitenwände, die ein Paar erste Seitenwände (10a, 10b) beinhalten, die sich so von Rändern der Bodenwand aus erstrecken, dass sie den Hauptflächen der Sekundärbatteriezellen (BT), die in der ersten Zellengruppe beinhaltet sind, gegenüberliegen, und ein Paar zweite Seitenwände (10c, 10d), die sich so von Rändern der Bodenwand aus erstrecken, dass sie den Hauptflächen der Sekundärbatteriezellen (BT), die in der zweiten Zellengruppe beinhaltet sind, gegenüberliegen, und mehrere Trennwände (10e), die aufrecht zu der Bodenwand angeordnet sind, aufweist;
**gekennzeichnet durch**
mehrere konkave Teile (12), die durch die Bodenwand, das erste Paar Seitenwände (10a, 10b) und die zweiten Seitenwände (10c, 10d) oder die Trennwände (10e) definiert sind, wobei die konkaven Teile einen jeweiligen Bodenteil der Sekundärbatteriezellen (BT) stützen, und einen Raum (SP), in dem ein anderes Bauelement als die Sekundärbatteriezellen (BT) angeordnet ist, wobei der Raum (SP) durch die Trennwände (10e) und die Seitenwände (10a, 10b, 10c, 10d) umschlossen wird.

2. Batteriemodul nach Anspruch 1, **dadurch gekennzeichnet, dass**, in einer Richtung, in der die Sekundärbatteriezellen (BT) gestapelt sind, ein Verhältnis von der Summe aus einer Breite der Sekundärbatteriezellen (BT) und einer Breite eines Freiraums zu einer benachbarten Sekundärbatteriezelle (BT) zu der Breite der Hauptfläche der Sekundärbatteriezelle (BT) in der Längsrichtung 1:4 bis 1:10 beträgt.

3. Batteriemodul nach Anspruch 1, ferner umfassend:
ein Stromschutzelement oder ein Wärmeschutzelement, das in dem Raum (SP) angeordnet ist.

4. Batteriemodul nach Anspruch 1 oder 3, ferner umfassend:
ein Schaltelement, das auf der Leiterplatte (30) angebracht ist.

5. Batteriemodul nach Anspruch 4, wenn Anspruch 4 von Anspruch 3 abhängig ist, **dadurch gekennzeichnet, dass** ein Elektrodenanschluss (PT, MT) der mehreren Sekundärbatteriezellen (BT) an einer Seite, die das niedrigste Potential aufweist, über das Schaltelement elektrisch mit dem Stromschutzelement oder dem Wärmeschutzelement verbunden ist.

6. Batteriemodul nach Anspruch 4, **dadurch gekennzeichnet, dass** das Schaltelement auf einer oberen Fläche der Leiterplatte (30) angeordnet ist.

## Revendications

1. Module de batterie comprenant :
une pluralité d'éléments de batterie secondaires (BT) comprenant chacun un corps de logement (1a) comprenant une surface inférieure, une paire de surfaces principales s'étendant sensiblement orthogonalement à la surface inférieure à partir d'une paire de côtés longs de la surface inférieure, et une paire de surfaces latérales s'étendant entre les surfaces principales, et un élément de couvercle (1b) opposé à la surface inférieure et ayant des bornes d'électrode (PT, MT) ;
un boîtier (10, 20) pour loger la pluralité des éléments de batterie secondaires (BT) ;
une pluralité d'éléments conducteurs (BB) pour raccorder électriquement les bornes d'électrode (PT, MT) des éléments de batterie secondaires (BT) ; et
une carte de circuit imprimé (30) placée au niveau d'une partie supérieure des éléments conducteurs (BB) sur le boîtier (10, 20),
dans lequel la pluralité des éléments de batterie secondaires (BT) comprennent un premier groupe d'éléments comprenant une pluralité d'éléments de batterie secondaires (BT) empilés le long d'une première direction, et un deuxième groupe d'éléments comprenant une pluralité d'éléments de batterie secondaires (BT) empilés le long d'une deuxième direction croisant la première direction, les surfaces latérales des éléments de batterie secondaires (BT) du premier groupe d'éléments sont opposées aux surfaces principales des éléments de batterie secondaires (BT) du deuxième groupe d'éléments, et le premier groupe d'éléments et le deuxième groupe d'éléments sont connectés en série, et
le boîtier (10, 20) comprend un premier boîtier (10) ayant une paroi inférieure opposée à la surface inférieure de la pluralité des éléments de batterie secondaires (BT), des parois latérales comprenant une paire de premières parois latérales (10a, 10b) s'étendant pour être opposées aux surfaces principales des éléments de batterie secondaires (BT) compris dans le premier groupe d'éléments à partir de bords de la paroi inférieure, et une paire de deuxièmes parois latérales (10c, 10d) s'étendant pour être opposées aux surfaces principales des éléments de batterie secondaires (BT) compris dans le deuxième groupe d'éléments à partir de bords de la paroi inférieure, et une pluralité de parois de séparation (10e) disposées de manière dressée sur la paroi inférieure ;
**caractérisé par**
une pluralité de parties concaves (12) définies par la paroi inférieure, la première paire de parois latérales (10a, 10b) et les deuxièmes parois latérales (10c, 10d), ou les parois de séparation (10e), dans lequel les parties concaves supportent une partie inférieure respective des éléments de batterie secondaires (BT), et un espace (SP) dans lequel un composant différent des éléments de batterie secondaires (BT) est placé, l'espace (SP) étant entouré par les parois de séparation (10e) et les parois latérales (10a, 10b, 10c, 10d).

2. Module de batterie selon la revendication 1,
**caractérisé en ce qu'**une direction dans laquelle les éléments de batterie secondaires (BT) sont empilés, un rapport entre la somme d'une largeur de l'élément de batterie secondaire (BT) et d'une largeur de l'espace par rapport à un élément de batterie adjacent (BT) et la largeur de la surface principale de l'élément de batterie secondaire (BT) dans la direction longitudinale est de 1:4 à 1:10.

3. Module de batterie selon la revendication 1, comprenant en outre :
un élément de protection contre le courant ou un élément de protection contre la chaleur placé dans l'espace (SP).

4. Module de batterie selon la revendication 1 ou 3, comprenant en outre :
un élément de commutation monté sur la carte de circuit imprimé (30).

5. Module de batterie selon la revendication 4, lorsque la revendication 4 est dépendante de la revendication 3, **caractérisé en ce qu'**une borne d'électrode (PT, MT) de la pluralité d'éléments de batterie secondaires (BT) sur un côté ayant le potentiel le plus bas est raccordée électriquement à l'élément de protection contre le courant ou l'élément de protection contre la chaleur via l'élément de commutation.

6. Module de batterie selon la revendication 4, **caractérisé en ce que** l'élément de commutation est placé sur une surface supérieure de la carte de circuit imprimé (30).
